# EUROPEAN PATENT SPECIFICATION

(11) **EP 1 849 350 B1**
(45) Date of publication and mention of the grant of the patent: **18.11.2009**
(21) Application number: 07106519.7
(22) Date of filing: 19.04.2007
(51) Int. Cl.: A01F 12/30, A01F 12/44

(54) **Clean grain and tailings conveying system for an agricultural combine**
Fördersystem für Korn und Überkehr für einen Mähdrescher
Système de transport de bon grain et résidu pour moissonneuse-batteuse

(30) Priority: 26.04.2006 US 411513; 24.04.2006 US 409770
(43) Date of publication of application: 31.10.2007
(73) Proprietor: CNH Belgium N.V., 8210 Zedelgem (BE)
(72) Inventor: Schmidt, James R., Andale, KS 67001 (US); Ricketts, Jonathan E., Ephrata, PA 17522 (US); Matousek, Robert A., Milan, IL 61264 (US)
(74) Representative: CNH IP Department

(56) References cited:
- EP-A1- 0 093 991
- EP-A1- 0 186 630
- US-A- 4 401 128
- US-A1- 2003 186 731

## Description

This invention relates generally to clean grain conveying and tailings conveying in an agricultural combine, and more particularly, to a system which utilizes a common drive and conveyor apparatus for conveying of both clean grain and tailings.

Agricultural combines typically have a rotary threshing or separating system for separating grain from larger elements of harvested crops, such as straw, stalks and the like. The grain and smaller elements of crop material, which can include, for instance, pod or cob fragments, typically fall from the separating system directly onto a vibratory cleaning system disposed therebelow, or, onto one or more conveyors for conveyance to the cleaning system. U.S. 3,537,460 and U.S. 4,884,994, illustrate well known internal combine conveyor systems.

The cleaning system typically includes sieves or shoes which are reciprocally moved, usually in the fore and aft directions, for cleaning or sifting the grain from tailings and material other than grain (MOG). Clean grain falling through the sieves drops onto one or more clean grain pans disposed therebelow, which pan or pans are typically inclined downwardly toward a sidewardly extending clean grain auger conveyor. The clean grain auger conveyor receives the clean grain and delivers it to an elevator which carries the clean grain up to a clean grain tank.

During the vibration of the sieves, air is blown upwardly and rearwardly therethrough, so as to carry lighter elements of the MOG, or chaff, away. Heavier elements and tailings too large to fall through the sieves and too heavy to be blown away are carried by the vibrations rearwardly along the surfaces of the sieves so as to fall over the rear edges thereof, onto a tailings pan located below the rear edges. The tailings pan is located below the clean grain pan and is similarly inclined downwardly and forwardly, and extends to a sidewardly extending tailings auger conveyor, which carries the tailings to a tailings return conveyor operable for carrying the tailings upwardly, back to the cleaning or separating system of the combine, for reprocessing.

The cleaning system of US 2003/186731 A1 comprises a sieve shoe and clean grain and tailings pans below the sieves, linked to a single drive mechanism. The oscillatory movement of the drive mechanism makes it possible to convey material on the sieve in a rearward direction and the material on the clean grain and tailings pan in an opposing direction, towards the clean grain and tailings return conveyor.

A problem that occurs in agricultural harvesting machines is the extensive height of the cleaning system, which reduces the available space for grain storage above the cleaning and separating system. In current machinery, a minimal grain pan height is required to ensure proper guidance of the grain to the clean grain auger and tailings to the tailings auger. Additional problems arise when harvesting uphill or downhill: the inclination of the clean grain and the tailings pan causes the supply to the respective augers to be retarded or accelerated respectively. Especially when changing from uphill to downhill, or vice versa, problems can occur due to delays or accelerations of the crop flow.

It is an object of the present invention to overcome the disadvantages of the prior art by providing an improved clean grain and tailings conveyor system for an agricultural combine.

According to the present invention, an agricultural harvesting machine according to claim 1 is provided. The means for conveying clean grain and tailings in a collecting trough advantageously supplies a positive flow of clean grain and tailings to the transfer troughs even when harvesting uphill or downhill.

The collecting troughs may comprise a first clean grain portion receiving clean grain conveying means and a second tailings portion receiving tailings conveying means. The conveying means comprise at least one helical auger. The collecting trough may extend in the longitudinal direction of the harvesting machine and the helical auger may extend in the same direction. The clean grain conveying means may comprise a first helical flight of the auger and the tailings conveying means may comprise a second helical flight of the auger, having opposite rotational directions. The clean grain conveying means may further comprise a third helical flight of the auger, the first and third helical flight may have opposite rotational directions.

The invention will now be described in further detail, by way of example, with reference to the accompanying drawings, in which:
FIGURE 1 is a simplified side view of an agricultural combine including a clean grain and tailings conveying system of the invention;
FIGURE 2 is a simplified side view of a structural frame of the combine of FIGURE 1, illustrating the conveying system of the invention, and mounting thereof in connection with the frame;
FIGURE 3 is a perspective view of the conveying system of the invention; and
FIGURE 4 is simplified schematic side view of elements of the conveying system of the invention.

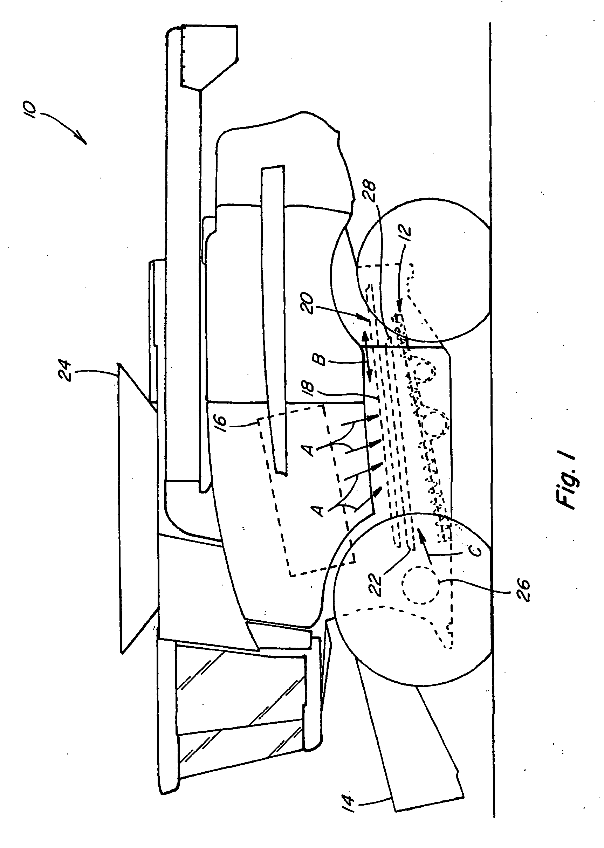

In the drawings, like numbers refer to like parts throughout the several views. In FIGURE 1, an agricultural combine 10 is shown, including a clean grain and tailings conveying system 12 constructed and operable according to the teachings of the present invention.

Combine 10 is of conventional, well known construction, including a feeder house 14 on a front end thereof, to which is connectable a header (not shown), operable for severing a swath of crops from a field as combine 10 is moved forwardly thereover, and conveying the severed crops to feeder house 14. Feeder house 14 includes an internal conveying system (not shown), for conveying the crops upwardly and rearwardly into the body of combine 10, into an inlet of a separating or threshing system 16 of the combine. Threshing system 16 generally includes a rotary rotor at least partially enclosed in a concave defining an arcuate space therebetween, and in which space the crop material is processed, for separating grain, and material other than grain (MOG), from straw, the straw being ejected rearwardly from the threshing system through the rear end of the combine for deposition on the field, in the well known manner. The grain and MOG will fall, and/or be conveyed, onto an upper sieve 18 of a cleaning system 20 located within the body of combine 10, as denoted generally by arrows A, located below separating system 16. Upper sieve 18 includes openings therethrough, which are sized for allowing the grain, and smaller elements of MOG, to fall therethrough onto a lower sieve 22 of cleaning system 20. Lower sieve 22 will have smaller openings therethrough compared to upper sieve 18, such that the sieves 18 and 22 provide a progressive cleaning mechanism for separating clean grain from the MOG. The clean grain which falls through lower sieve 22 is desired to be collected and conveyed to a grain tank 24.

To facilitate the flow of the clean grain through sieves 18 and 22, the sieves are vibrated or reciprocally moved, typically in a fore and aft direction, as denoted by arrow B. At the same time, air from a fan 26 is blown upwardly and rearwardly through sieves 18 and 22. The combination of this air flow and vibratory movement, results in the smaller grain being sifted through the sieves 18 and 22, whereas lighter elements of the MOG, referred to also as chaff, are blown upwardly and rearwardly away from sieves 18 and 22. This chaff is either blown into an optional chaff spreader (not shown), which is operable for distributing the chaff over a desired swath of the field from which the crop is cut; or it is directed into an optional chopper (also not shown), for mixing with straw for chopping and distribution thereby; or it is directed downwardly onto the field through a rear opening of the combine, all in the well known manner. Larger elements of MOG which are unable to pass through upper sieve 18 are moved to the rear peripheral edge portion thereof by the vibratory movements thereof, and will fall therefrom, either onto the field therebelow, or chopped and/or spread. Typically, the sieves are adjusted, such that smaller elements of MOG, also referred to as tailings, which are still likely to contain grain, are allowed to pass through the upper sieve 18, but not lower sieve 22. On sieve 22, the tailings are moved by the vibratory movements toward a rear peripheral edge portion 28 of sieve 22, and fall thereover.

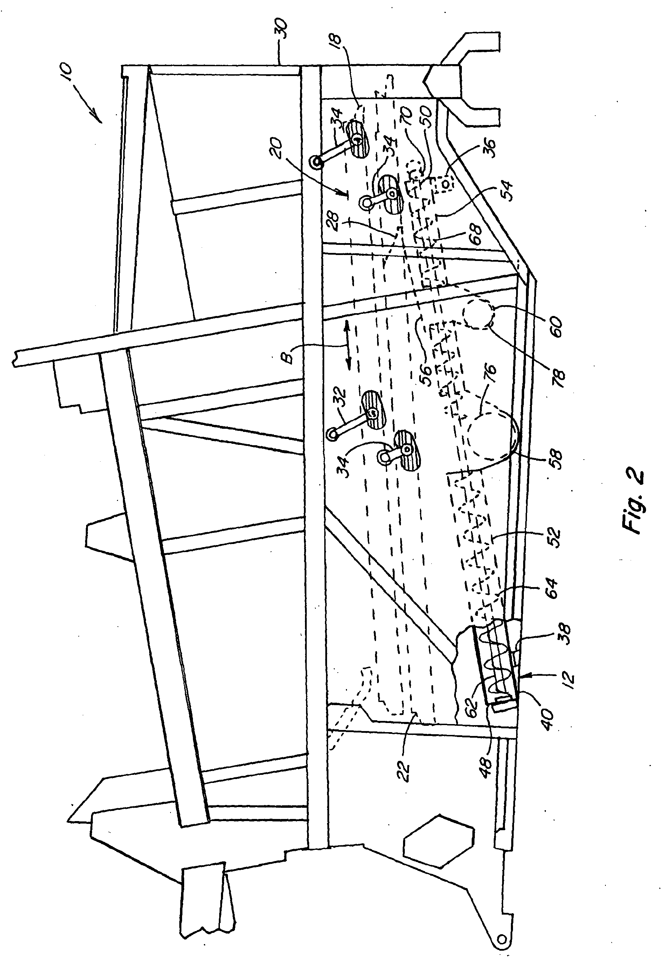

Referring also to FIGURES 2, 3 and 4, clean grain and tailings conveying system 12 of the invention is shown in association with various aspects of threshing system 16 and cleaning system 20. More particularly referring to FIGURE 2, sieves 18 and 22 are illustrated as being suspended from a structural frame 30 of combine 10 by pivoting support arms 32 and 34, respectively, for the reciprocal fore and aft movement, as denoted by arrow B, as effected by a suitable drive mechanism (not shown), in the well known manner. Clean grain and tailings conveying system 12, in contrast, is illustrated as being fixedly connected or mounted to structural frame 30, below lower sieve 22, by brackets 36 and 38, so as to be immovable relative to structural frame 30. This is advantageous, as it eliminates the additional loading on cleaning system 20, including on support arms 32 and 34 and the drive mechanism therefor, which, as pointed out above, has been found to be a problem.

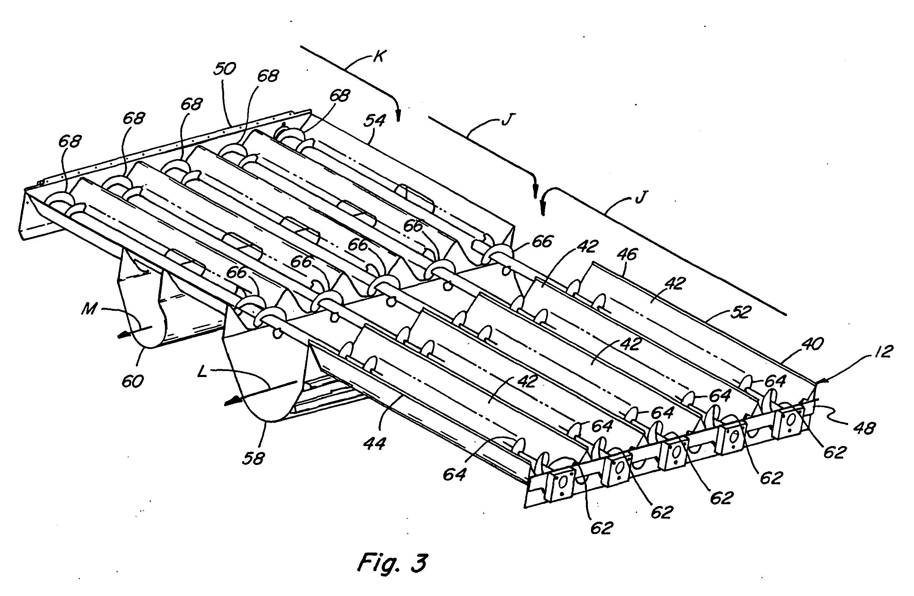

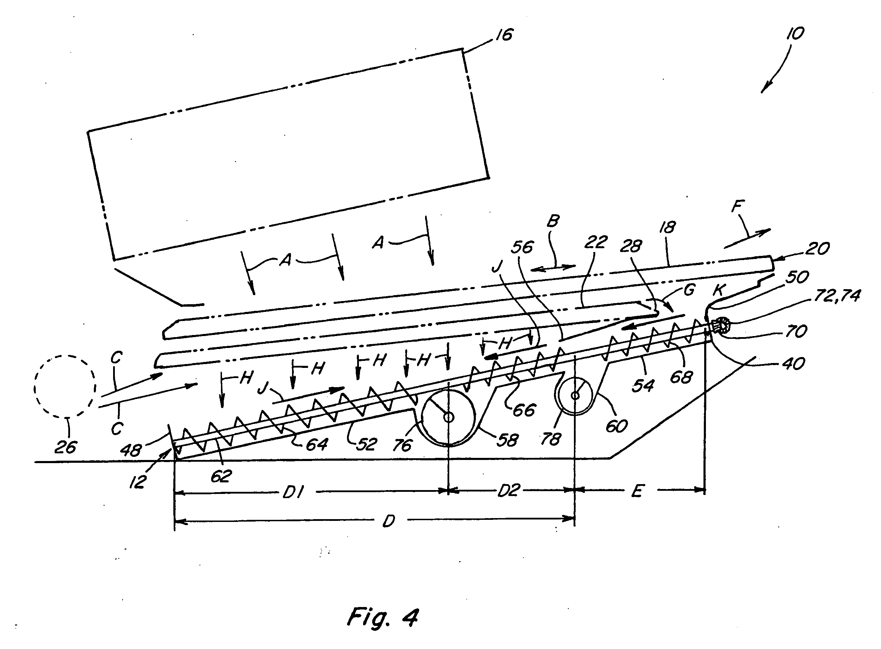

FIGURES 3 and 4 best illustrate the construction and operation of clean grain and tailings conveying system 12 of the invention. Conveying system 12 generally includes a pan 40 which is fixedly mounted to structural frame 30 by brackets 36 and 38, so as to be located directly beneath lower sieve 22 of cleaning system 20, including beneath peripheral edge portion 28 of lower sieve 22 (FIGURE 2). Pan 40 preferably includes a plurality or array of side-by-side elongate collecting troughs 42, extending across the width of pan 40, between opposite side edges 44 and 46 thereof, as best illustrated in FIGURE 3. Collecting troughs 42 preferably extend in the fore and aft direction, between a forward edge 48 of pan 40, and a rear edge 50. Each collecting trough 42 has a clean grain receiving portion 52, located beneath those regions of lower sieve 22 through which clean grain is expected to fall, and a tailings receiving portion 54, positioned directly beneath peripheral edge portion 28 of lower sieve 22 (FIGURE 2). As best shown in FIGURE 4, clean grain receiving portion 52 has an overall fore and aft extent, denoted by arrow D, and tailings receiving portion 54 has an overall fore and aft extent denoted by arrow E. The extent of clean grain receiving portion 52 is further subdivided into a forward clean grain receiving region, generally having a fore and aft extent denoted D1, and a rear clean grain receiving region, having an extent D2.

Referring more particularly to FIGURE 4, in operation, as grain and MOG is flowing downwardly from threshing system 16 onto upper sieve 18, denoted by arrows A, that sieve, and lower sieve 22, are being reciprocally moved, as denoted by arrow B. Simultaneously, fan 26 is operated to generate upward and rearward air flows, denoted by arrows C, which blow through the openings through sieves 18 and 22, to carry chaff rearwardly, away from cleaning system 20, as denoted by arrow F. At the same time, tailings are allowed to pass through the openings of upper sieve 18, but not those of lower sieve 22. The tailings are moved by vibration rearwardly along the surface of lower sieve 22, until they reach peripheral edge portion 28, which is the rear edge of sieve 22, where they fall therefrom, as denoted by arrow G. The tailings, denoted by arrow G, will fall onto tailings receiving portion 54 of pan 40, which is located directly below edge portion 28. Clean grain will be allowed to pass through lower sieve 22, as denoted by arrows H, so as to fall onto clean grain receiving portion 52 of pan 40. Some of the clean grain will typically fall onto clean grain receiving portion 52 in the forward region D1, and some will fall in the rear region D2. Here, it should be noted that a deflector shield 56 is disposed beneath the rear end portion of sieve 22, to deflect clean grain which falls therethrough forwardly, so as to fall onto clean grain receiving portion 52 of pan 40, as opposed to tailings receiving portion 54 located below the rear end.

Pan 40 additionally preferably forms and includes a clean grain transfer conveyor trough 58 disposed below and in connection with clean grain receiving portion 52, and a tailings transfer conveyor trough 60 disposed below and in connection with tailings receiving portion 54. An elongate, helical auger 62 is supported in each collecting trough 42, so as to extend longitudinally in the fore and aft direction therealong, continuously through both the clean grain receiving portion 52 and the tailings receiving portion 54. Each auger 62 includes a first helical auger flight 64 extending in a first predetermined direction therearound through the forward clean grain receiving portion D1 of pan 42; and a second helical auger flight 66 extending in a second rotational direction therearound, opposite the first rotational direction, through the region D2, and through the tailings receiving portion 54. Each auger 62 is connected to a drive mechanism operable for rotating it, here the mechanism being illustrated as including a bevel gear 70 on the rear end of auger 62, which gear is enmeshed with a bevel gear 72 on a drive shaft 74 which extends sidewardly across the rear end of pan 40, so as to jointly rotate augers 62. Drive shaft 74 can be rotated by any suitable drive, such as, but not limited to, a belt, chain or shaft, in connection with a power plant of combine 10 (not shown).

When augers 62 are rotated in a predetermined rotational direction, flights 64, 66 and 68 will convey clean grain and tailings separately and simultaneously along collecting troughs 42, and into clean grain transfer conveyor trough 58, and tailings transfer conveyor trough 60, as illustrated by arrows J and K, respectively. Clean grain transfer conveyor trough 58 contains a helical auger 76, and tailings transfer conveyor trough 60 contains an auger 78, which augers are rotatable in the conventional manner using suitable drives (not shown) for conveying the clean grain and tailings to a clean grain elevator (not shown) and a tailings return system (also not shown), as illustrated by arrows L and M in FIGURE 3, in the well known manner.

As a result of the clean grain and tailings conveying system of the invention as represented by the embodiment 12, stresses on the support structure for the cleaning system and on the cleaning system itself, can be significantly reduced. And, clean grain and tailings generated by a cleaning system can be more positively distributed, respectively, to the clean grain tank and tailings return system, or other locations, efficiently, and effectively, which may provide increased throughput rates compared to use of gravity and vibration alone.

## Claims

1. An agricultural harvesting machine (10) comprising:
- a frame (30),
- a cleaning system (20), comprising at least one sieve (18, 22), and operable to vibrate said sieve (18, 22) to facilitate the flow of clean grain through said sieve (18, 22) and to move the tailings to the end of said sieve (18, 22), and
- a clean grain and tailings conveyor system (12), positioned below said at least one sieve (18, 22), and comprising transfer troughs (58, 60), for said clean grain and said tailings; and further comprising at least one collecting trough (42) and means for conveying (62) said clean grain and tailings through said at least one collecting trough (42) to said transfer troughs (58, 60); and
**characterized in that** said conveying means comprise at least one helical auger (62).

2. An agricultural harvesting machine according to claim 1, **characterized in that** said at least one collecting trough (42) comprises a first clean grain portion (52) receiving clean grain conveying means (64, 66), and a second tailings portion (54) receiving tailings conveying means (68).

3. An agricultural harvesting machine according to claim 1 or 2, **characterized in that** said at least one collecting trough (42) extends in a longitudinal direction of said agricultural harvesting machine (10) and said at least one helical auger (62) has an axis extending in the same direction.

4. An agricultural harvesting machine according to claim 2 or 3, **characterized in that** said clean grain conveying means comprise a first helical flight (64) of said at least one auger (62) and said tailings conveying means comprise a second helical flight (68) of said at least one auger (62), said first and second helical flight having opposite rotational directions.

5. An agricultural harvesting machine according to claim 4, **characterized in that** said clean grain conveying means further comprise a third helical flight (66) of said at least one auger (62), said first and said third helical flights (64, 66) having opposite rotational directions.

6. An agricultural harvesting machine according to any of the preceding claims, **characterized in that** said clean grain and tailings conveyor system (12) is fixedly mounted on said frame (30).

7. An agricultural harvesting machine according to any of the preceding claims, **characterized in that** said clean grain and tailings conveyor system (12) further comprises a shield (56) below the rear portion of said at least one sieve (18) and over said tailings portion (54).

8. An agricultural harvesting machine according to any of the preceding claims **characterized in that** said at least one collecting trough (42) is inclined rearwardly and upwardly and said transfer troughs (58, 60) are positioned remote from the front end of said at least one collecting trough (42).

9. An agricultural harvesting machine according to claim 8, when appended to claim 4 or 5, **characterized in that** said first helical flight (64) extends between the front end of said at least one collecting trough (42) and said clean grain transfer trough (58).

10. An agricultural harvesting machine according to any of the preceding claims, **characterized in that** said clean grain and tailings conveyor system (12) comprises a plurality of collecting troughs (42) and conveying means (62).

11. An agricultural harvesting machine according to claim 10, **characterized in that** said clean grain and tailings conveyor system (12) comprises a shaft operable to rotate each of said conveying means (62).

## Patentansprüche

1. Landwirtschaftliche Erntemaschine mit:
- einem Rahmen (30),
- einem Reinigungssystem (20), das zumindest ein Sieb (18, 22) umfasst und betreibbar ist, um das Sieb (18, 22) in Schwingungen zu versetzen, um die Strömung von reinen Körnern durch das Sieb (18, 22) zu erleichtern und um die Überkehr zum Ende des Siebes (18, 22) zu bewegen, und
- ein Fördersystem (12) für reine Körner und Überkehr, das unterhalb des zumindest einen Siebes (18, 22) angeordnet ist und Überführungswannen (58, 60) für die reinen Körner und die Überkehr umfasst und weiterhin zumindest eine Sammelwanne (42) und Einrichtungen zum Fördern (62) der reinen Körner und der Überkehr durch die zumindest eine Sammelwanne (42) hindurch zu den Überführungswannen (58, 60) umfasst; und
**dadurch gekennzeichnet, dass** die Fördereinrichtungen zumindest einen Schneckenförderer (62) umfassen.

2. Landwirtschaftliche Erntemaschine nach Anspruch 1, **dadurch gekennzeichnet, dass** die zumindest eine Sammelwanne (42) einen ersten Abschnitt (52) für reine Körner, der Fördereinrichtungen (64, 66) für reine Körner aufnimmt, und einen zweiten Abschnitt (54) für Überkehr umfasst, der Überkehr-Fördereinrichtungen (68) aufnimmt.

3. Landwirtschaftliche Erntemaschine nach Anspruch 1 oder 2, **dadurch gekennzeichnet, dass** sich die zumindest eine Sammelwanne (42) in einer Längsrichtung der landwirtschaftlichen Erntemaschine (10) erstreckt, und dass der zumindest eine Schneckenförderer (42) eine Achse aufweist, die sich in der gleichen Richtung erstreckt

4. Landwirtschaftliche Erntemaschine nach Anspruch 2 oder 3, **dadurch gekennzeichnet, dass** die Fördereinrichtungen für reine Körner eine erste schraubenlinienförmige Schaufel (64) des zumindest einen Schneckenförderers (62) umfassen, und dass die Überkehr-Fördereinrichtungen eine zweite schraubenlinienförmige Schaufel (68) des zumindest einen Schneckenförderers (62) umfassen, wobei die ersten und zweiten schraubenlinienförmigen Schaufeln entgegengesetzte Drehrichtungen aufweisen.

5. Landwirtschaftliche Erntemaschine nach Anspruch 4, **dadurch gekennzeichnet, dass** die Fördereinrichtungen für reine Körner weiterhin eine dritte schraubenlinienförmige Schaufel (66) des zumindest einen Schneckenförderers (62) umfassen, wobei die ersten und dritten schraubenlinienförmigen Schaufeln (64, 66) entgegengesetzte Drehrichtungen haben.

6. Landwirtschaftliche Erntemaschine nach einem der vorhergehenden Ansprüche, **dadurch gekennzeichnet, dass** das Fördersystem (12) für reine Körner und Überkehr fest auf dem Rahmen (30) befestigt ist.

7. Landwirtschaftliche Erntemaschine nach einem der vorhergehenden Ansprüche, **dadurch gekennzeichnet, dass** das Fördersystem (12) für reine Körner und Überkehr weiterhin eine Abschirmung (56) unter dem hinteren Teil des zumindest einen Siebes (18) und oberhalb des Überkehr-Abschnittes (54) umfasst.

8. Landwirtschaftliche Erntemaschine nach einem der vorhergehenden Ansprüche, **dadurch gekennzeichnet, dass** die zumindest eine Sammelwanne (42) in Rückwärtsrichtung und Aufwärtsrichtung geneigt ist, und dass die Überführungswannen (58, 60) entfernt von dem vorderen Ende der zumindest einen Sammelwanne (42) angeordnet sind.

9. Landwirtschaftliche Erntemaschine nach Anspruch 8 unter Rückbeziehung auf Anspruch 4 oder 5, **dadurch gekennzeichnet, dass** sich die erste schraubenlinienförmige Schaufel (64) zwischen dem vorderen Ende der zumindest einen Sammelwanne (42) und der Überführungswanne (58) für reine Körner erstreckt.

10. Landwirtschaftliche Erntemaschine nach einem der vorhergehenden Ansprüche, **dadurch gekennzeichnet, dass** das Fördersystem (12) für reine Körner und Überkehr eine Mehrzahl von Sammelwannen (42) und Fördereinrichtungen (62) umfasst.

11. Landwirtschaftliche Erntemaschine nach Anspruch 10, **dadurch gekennzeichnet, dass** das Fördersystem (12) für reine Körner und Überkehr eine Welle umfasst, die zum Drehen jeder der Fördereinrichtungen (62) betreibbar ist.

## Revendications

1. Machine de récolte agricole (10) comprenant :
- un châssis (30),
- un système de nettoyage (20), comprenant au moins un tamis (18, 22) et pouvant fonctionner pour faire vibrer ledit tamis (18, 22) pour faciliter le passage du grain propre au travers du dit tamis (18, 22) et pour entraîner les résidus à l'extrémité du dit tamis (18, 22), et
- un système de convoyage de grain propre et de résidus (12), positionné sous ledit au moins un tamis (18, 22), et comprenant des gouttières de renvoi (58, 60), pour ledit grain propre et les dits résidus, et comprenant en plus au moins une gouttière de récupération (42) et un organe de convoyage (62) du dit grain propre et des résidus au travers de la dite au moins une gouttière de récupération (42) vers les dites gouttières de renvoi (58, 60), et
**caractérisée en ce que** ledit organe de convoyage comprend au moins une vis transporteuse hélicoïdale (62).

2. Machine de récolte agricole selon la revendication 1, **caractérisée en ce que** ladite au moins une gouttière de récupération (42) comprend une première portion de grain propre (52) recevant un organe de convoyage de grain propre (64, 66), et une seconde portion de résidus (54) recevant un organe de convoyage de résidus (68).

3. Machine de récolte agricole selon la revendication 1 ou 2, **caractérisée en ce que** ladite au moins une gouttière de récupération (42) s'étend dans un sens longitudinal de ladite machine de récolte agricole (10) et ladite au moins une vis transporteuse hélicoïdale (62) a un axe s'étendant dans la même direction.

4. Machine de récolte agricole selon la revendication 2 ou 3, **caractérisée en ce que** ledit organe de convoyage de grain propre comprend une première volée hélicoïdale (64) de ladite au moins une vis transporteuse (62) et ledit organe de convoyage des résidus comprend une seconde volée hélicoïdale (68) de ladite au moins une vis transporteuse (62), les dites première et seconde volées hélicoïdales ayant des sens de rotation opposés.

5. Machine de récolte agricole selon la revendication 4, **caractérisée en ce que** ledit organe de convoyage de grain propre comprend en plus une troisième volée hélicoïdale (66) de ladite au moins une vis transporteuse (62), les dites première et troisième volées hélicoïdales ayant des sens de rotation opposés.

6. Machine de récolte agricole selon l'une quelconque des revendications précédentes, **caractérisée en ce que** ledit système convoyeur de grain propre et de résidus (12) est monté de manière solidaire au dit châssis (30).

7. Machine de récolte agricole selon l'une quelconque des revendications précédentes, **caractérisée en ce que** ledit système convoyeur de grain propre et de résidus (12) comprend en plus un panneau (56) sous la partie arrière du dit au moins un tamis (18) et au-dessus de ladite portion de résidus (54).

8. Machine de récolte agricole selon l'une quelconque des revendications précédentes, **caractérisée en ce que** ladite au moins une gouttière de récupération (42) est inclinée vers le haut en arrière et les dites gouttières de renvoi (58, 60) sont positionnées à distance de l'extrémité avant de ladite au moins une gouttière de récupération (42).

9. Machine de récolte agricole selon la revendication 8, lorsqu'elle se rapporte à la revendication 4 ou 5, **caractérisée en ce que** ladite première volée hélicoïdale (64) s'étend entre l'extrémité avant de ladite au moins une gouttière de récupération (42) et ladite gouttière de renvoi du grain propre (58).

10. Machine de récolte agricole selon l'une quelconque des revendications précédentes, **caractérisée en ce que** ledit système convoyeur de grain propre et de résidus (12) comprend une pluralité de gouttières de récupération (42) et d'organes de convoyage (62).

11. Machine de récolte agricole selon la revendication 10, **caractérisée en ce que** ledit système convoyeur de grain propre et de résidus (12) comprend un arbre pouvant fonctionner pour faire tourner chacun des dits organes de convoyage (62).
